# EUROPÄISCHE PATENTSCHRIFT

(11) **EP 4 286 815 B1**
(45) Veröffentlichungstag und Bekanntmachung des Hinweises auf die Patenterteilung: **29.07.2026**
(21) Anmeldenummer: 23176935.7
(22) Anmeldetag: 02.06.2023
(51) Int. Cl.: G01L 9/00, G01L 19/06

(54) **DRUCKSENSOR MIT EINER MEMBRANVORRICHTUNG MIT SCHICHTAUFBAU**
PRESSURE SENSOR WITH MEMBRANE DEVICE HAVING A LAYERED STRUCTURE
CAPTEUR DE PRESSION AVEC DISPOSITIF À MEMBRANE À STRUCTURE EN COUCHES

(30) Priorität: 03.06.2022 DE 102022114193
(43) Veröffentlichungstag der Anmeldung: 06.12.2023
(73) Patentinhaber: WIKA Alexander Wiegand SE & Co. KG, 63911 Klingenberg/Main (DE)
(72) Erfinder: Schwanitz, Konrad, 63743 Aschaffenburg (DE); Zöller, Michael, 63911 Klingenberg (DE); Kehrer, Lorenz, 63762 Großostheim (DE); Langenschwarz, Marco, 63933 Mönchberg (DE)
(74) Vertreter: Liedtke & Partner Patentanwälte

(56) Entgegenhaltungen:
- DE-A1- 102018 130 291
- US-A- 5 400 655
- US-A1- 2022 112 954
- US-B2- 10 514 311

## Beschreibung

### TECHNISCHES GEBIET

Die vorliegende Erfindung betrifft einen Drucksensor mit einer Membranvorrichtung mit einem zumindest auf einem Abschnitt der Membran aufgebrachten Schichtaufbau.

Mit Schichtaufbau sind hierbei allgemein Stapel bzw. Abfolgen von Schichten aus verschiedenen Materialien gemeint, welche beispielsweise durch Verfahren der Dünnfilmtechnik oder Dickschichttechnik herstellbar sind. Entsprechende Verfahren, wie etwa physikalische oder chemische Gasphasenabscheidung, sowie weitere Verfahren zur Bearbeitung entsprechender Schichten, wie etwa Fotolithographie oder Lasertrimmen, sind aus dem Stand der Technik bekannt.

In beispielhaften Ausgestaltungen ist der Schichtaufbau ein Dünnfilmschichtaufbau. Dies ist vorteilhaft, da sich durch die Verfahren der Dünnfilmtechnologie die in nachfolgenden Abschnitten erläuterten Merkmale und Beispiele besonders gezielt umsetzen lassen.

Membranabschnitte, auf welchem ein Schichtaufbau aufgebracht bzw. aufgetragen wird, werden in diesem Kontext und insbesondere im Rahmen dieser Schrift auch als Substrate bezeichnet.

Membranvorrichtungen mit Schichtaufbau kommen beispielsweise im technischen Gebiet der Messtechnik zum Einsatz. So ist etwa aus der DE 10 2007 047 707 eine Druckmesszelle bekannt, welche ein Substrat aufweist, auf welchem zunächst eine Isolierschicht aufgetragen wird. Auf die Isolierschicht folgt eine Messschicht mit Leiterbahnen, welche abschließend zumindest teilweise durch eine Passivierungsschicht oder Schutzschicht abgedeckt werden. Als Substrat wird hierbei ein flexibler Membranabschnitt der Druckmesszelle bezeichnet, welcher umfänglich von einem starren Randabschnitt der Druckmesszelle getragen wird.

Derartige Membranvorrichtungen werden häufig für Druckmessungen in industriellen Prozessanlagen eingesetzt. Dabei wird eine dem Schichtaufbau abgewandte Seite eines flexiblen Membranabschnitts einem Prozessmedium, etwa einem unter Druck stehenden Gas oder einer unter Druck stehenden Flüssigkeit, ausgesetzt. Druckänderungen des Prozessmediums führen zu einer unterschiedlich starken Auslenkung des flexiblen Membranabschnitts. Durch die Auslenkung auftretende Dehnungen oder Stauchungen des flexiblen Membranabschnitts können dabei durch Dehnungswiderstände, welche in den Schichtaufbau integriert sind, detektiert werden.

Insbesondere, wenn das Prozessmedium dabei flüchtige und/oder reaktive Komponenten beinhaltet, kann es dabei jedoch zu Beeinträchtigungen der Membran oder der Messschaltung im Schichtaufbau kommen.

Weiterhin ist aus der US 10 514 311 B2 ein Prozessdrucksendersystem mit einem Prozessdrucksendergehäuse, einem Prozessdrucksensor in dem Prozessdrucksendergehäuse, einer Flanschstirnfläche in dem Prozessdrucksendergehäuse, einer Isolationsmembran an der Flanschstirnfläche, einem ersten Kapillardurchgang, der ein erstes Füllfluid von der Isolationsmembran zu dem Prozessdrucksensor transportiert, und einer räumlich abgesetzten Dichtung zum Koppeln des Prozessdrucksenders mit einem Prozessfluid. Die Dichtung umfasst eine Prozessdichtungsmembran, welche ausgebildet ist, mit dem Prozessfluid eines industriellen Prozesses gekoppelt zu werden. Weiterhin umfasst die Dichtung einen Kapillardurchgang, der das Füllfluid von der Prozessdichtungsmembran zu der Isolationsmembran transportiert. Die Prozessdichtungsmembran ist mit einer diamantartigen Kohlenstoff-Beschichtung überzogen und zwischen der Kohlenstoff-Beschichtung und der Prozessdichtungsmembran ist eine Zwischenschicht angeordnet. Die Zwischenschicht stellt eine Übergangsschicht mit einem Wärmeausdehnungskoeffizienten bereit, der zwischen dem Wärmeausdehnungskoeffizienten der Kohlenstoff-Beschichtung und dem Wärmeausdehnungskoeffizienten der Prozessdichtungsmembran liegt.

Die DE 10 2018 130 291 A1 beschreibt einen Druckmessaufnehmer mit einem metallischen Gehäusekörper und einer Trennmembran, welche unter Bildung einer Druckkammer zwischen einer Oberfläche des Gehäusekörpers und der Trennmembran druckdicht an dem Gehäusekörper befestigt ist. Von der Druckkammer erstreckt sich ein hydraulischer Pfad durch den Gehäusekörper. Die Trennmembran weist einen metallischen Werkstoff und auf einer dem Gehäusekörper abgewandten ersten Membranseite einen Schichtaufbau auf. Der Schichtaufbau umfasst eine gegenüber Wasserstoffionen diffusionshemmende Goldschicht und eine diamantartige Kohlenstoffschicht, wobei die diffusionshemmende Goldschicht auf der ersten Membranseite und die diamantartige Kohlenstoffschicht auf der diffusionshemmenden Schicht aufgebracht ist.

Die US 2022/112954 A1 beschreibt eine Membrandichtung mit einer ersten Membran, die einem Messmedium zugewandt ist, einem flüssigkeitsdichten Gehäuse und einer zweiten Membran. Die erste Membran wird vom Messmedium mit Druck beaufschlagt. Das flüssigkeitsdichte Gehäuse enthält eine Flüssigkeit zur Druckübertragung an einen Transmitter. Die zweite Membran bewirkt, dass in die abgedichtete Flüssigkeit eingedrungener Wasserstoff durch die zweite Membran dringt und aus der abgedichteten Flüssigkeit abgelassen wird.

Weiterhin beschreibt die US 5 400 655 A eine Vorrichtung zum Messen von Druck in einer ersten Flüssigkeit. Die Vorrichtung umfasst eine in der Vorrichtung enthaltene zweite Flüssigkeit zum Übertragen einer Druckschwankung der ersten Flüssigkeit an einen Druckerfassungsabschnitt. Weiterhin umfasst die Vorrichtung eine Dichtungsmembran zum Trennen der ersten Flüssigkeit von der zweiten Flüssigkeit und einen ersten nicht elektrisch leitenden Film, der an einer Oberfläche der Dichtungsmembran angebracht ist. Der erste nicht elektrisch leitende Film und die Oberfläche befinden sich auf der Seite der ersten Flüssigkeit. Weiterhin umfasst die Vorrichtung einen Wasserstoffdiffusionssperrfilm, der zwischen dem ersten nicht elektrisch leitenden Film und der Oberfläche der Dichtungsmembran angeordnet ist. Der nicht elektrisch leitende Film kommt dabei mit der ersten Flüssigkeit in Kontakt.

Der Wasserstoffdiffusionssperrfilm besteht aus einem metallischen Material, in das Wasserstoff nicht leicht diffundiert.

### AUFGABE DER ERFINDUNG

Vor diesem Hintergrund besteht die Aufgabe der Erfindung darin, einen Drucksensor mit einer Membranvorrichtung anzugeben, welche weniger anfällig auf Beeinträchtigungen durch Wasserstoff und/oder andere Umgebungseinflüsse reagiert oder vor einer Beeinträchtigung durch Wasserstoff und/oder andere Umgebungseinflüsse besser geschützt ist.

Diese Aufgabe wird gelöst durch einen Drucksensor, welcher die Merkmale des Anspruchs 1 verwirklicht.

Vorteilhafte Weiterbildungen des Drucksensors sind Gegenstand der abhängigen Ansprüche.

### ZUSAMMENFASSUNG DER ERFINDUNG

Ein erster Aspekt der vorliegenden Erfindung betrifft einen Drucksensor mit einer Membranvorrichtung mit einem flexiblen Membranabschnitt, wobei eine erste Seite des Membranabschnitts einem Prozessmedium, welches Wasserstoff oder wasserstoffhaltig ist, ausgesetzt ist beziehungsweise dafür vorgesehen ist, einem Prozessmedium, welches Wasserstoff oder wasserstoffhaltig ist, ausgesetzt zu werden und wobei eine zweite Seite des Membranabschnitts einen Schichtaufbau aufweist. Das heißt, ein Schichtaufbau ist auf der Oberfläche dieser zweiten Seite des flexiblen Membranabschnitts aufgebracht, angeordnet oder in die Oberfläche dieser Seite eingebettet. Die erste und zweite Seite des Membranabschnitts können dabei sich gegenüberliegende Seiten desselben sein. Der flexible Membranabschnitt kann hierbei auch als Substrat bezeichnet werden, auf welchem der Schichtaufbau angeordnet bzw. aufgebracht wird, zum Beispiel durch ein Abscheideverfahren, wie bezüglich des Standes der Technik erläutert.

Der Schichtaufbau umfasst zumindest eine erste Schicht und eine zweite Schicht. Die erste Schicht weist einen Wärmeausdehnungskoeffizient auf, dessen Wert zwischen den Werten der Wärmeausdehnungskoeffizienten von Membranabschnitt und zweiter Schicht liegt. Der Wärmeausdehnungskoeffizient - in der Praxis teilweise auch als thermischer Ausdehnungskoeffizient oder nur als Ausdehnungskoeffizient bezeichnet - ist hierbei ein Materialkennwert, welcher beschreibt, wie stark sich ein Körper aus einem jeweiligen Material bei Erwärmung ausdehnt. Wärmeausdehnungskoeffizienten werden üblicherweise in der Einheit [K⁻¹] angegeben. Ein hoher Wärmeausdehnungskoeffizient bedeutet, dass sich das jeweilige Material stark bei Erwärmung ausdehnt bzw. stark bei Abkühlung zusammenzieht. Wenn beispielsweise die zweite Schicht einen geringeren Wärmeausdehnungskoeffizienten aufweist, als das Material des flexiblen Membranabschnitts, soll die erste Schicht also einen Wärmeausdehnungskoeffizienten aufweisen, welcher größer ist als jener der zweiten Schicht, aber zugleich kleiner als derjenige des flexiblen Membranabschnitts.

Die zweite Schicht weist gegenüber Wasserstoff eine Permeabilität auf, welche geringer ist als die entsprechende Permeabilität des Membranabschnitts gegenüber Wasserstoff. Die Permeabilität ist hierbei ein Materialkennwert, welcher beschreibt, wie durchlässig ein Körper aus einem jeweiligen Material für Atome oder Moleküle eines bestimmten Gases oder einer bestimmten Flüssigkeit ist, welche bezüglicher zweier Seiten des Körpers (zum Beispiel vor und hinter dem Körper) ein Konzentrationsgefälle oder ein Druckgefälle aufweisen. Der Stoff, also das Gas oder die Flüssigkeit, dessen oder deren Atome oder Moleküle durch das Material permeieren (also das Material durchdringen), wird in diesem Kontext auch als Permeat bezeichnet; der Prozess wird auch als Permeation bezeichnet. In Bezug auf die Permeation von Materialschichten mit einer gegebenen Dicke lässt sich für die meisten Materialien feststellen, dass die Permeation mit zunehmender Schichtdicke abnimmt, aber mit zunehmender Druck- oder Konzentrationsdifferenz des Permeaten zwischen den beiden Seiten der Schicht ansteigt. Weiterhin kann die Permeabilität eines Materials temperaturabhängig sein. Zudem kann die Permeabilität für verschiedene Permeate verschieden sein, was häufig auch als selektive Permeabilität bezeichnet wird. Aufgrund dieser vielfältigen Abhängigkeiten der Permeabilität - welche teilweise auch mittels sogenannter Permeabilitätskoeffizienten beziffert wird - wird sie in der Praxis in vielen verschiedenen Einheiten angegeben, welche meist davon abhängen, nach welcher Methode die Materialkennzahl bestimmt wurde. Somit können absolute Werte durchaus je nach Quelle unterschiedlich sein und eine höhere Relevanz ist dem Verhältnis der Werte verschiedener Materialien beizumessen, wenn die Werte nach der gleichen Methode bestimmt wurden. In dieser Schrift wird teilweise auf die Ausformulierung bezüglich der Atome oder Moleküle des Permeaten verzichtet und vereinfacht formuliert, dass etwa das Permeat das Material permeiert oder durchdringt oder dass ein Material oder eine Schicht eine bestimmte Permeabilität gegenüber einem bestimmten Permeaten aufweist. Wenn also gemäß der vorliegenden Erfindung das Material der zweiten Schicht so gewählt wird, dass die Permeabilität der zweiten Schicht gegenüber Wasserstoff geringer als jene des flexiblen Membranabschnitts ist, dann bedeutet dies, dass die Atome oder Moleküle des Wasserstoffes nur langsamer bzw. nur in geringerem Maße durch die zweite Schicht permeieren können, als durch den flexiblen Membranabschnitt.

Dabei ist die erste Schicht hierbei unmittelbar oder mittelbar auf dem Membranabschnitt aufgebracht und die zweite Schicht ist hierbei unmittelbar oder mittelbar auf der ersten Schicht aufgebracht, wobei die erste Schicht zwischen dem Membranabschnitt und der zweiten Schicht angeordnet ist. Wenn eine Schicht auf einer anderen unmittelbar aufgebracht ist, bedeutet dies im Sinne dieser Schrift, dass sich keine weitere Schicht oder Lage zwischen den beiden befindet. Wenn eine Schicht mittelbar auf einer anderen Schicht aufgebracht ist, bedeutet dies wiederum im Sinne dieser Schrift, dass zwischen den beiden Schichten noch andere Schichten oder Lagen angeordnet sind.

Der erfindungsgemäße Membranaufbau kann in vorteilhafter Weise eine hohe Beständigkeit gegenüber Beeinträchtigungen durch das Prozessmedium erzielen. Eine Permeation des Wasserstoffes kann praktisch verhindert, zumindest deutlich verlangsamt oder kontrolliert werden; weiterhin kann ein ungleichmäßige Permeation über die Fläche des flexiblen Membranabschnitts verhindert werden oder die Permeation findet zumindest erheblich gleichmäßiger auf der durch den Schichtaufbau abgedeckten Fläche des flexiblen Membranabschnitts statt. Somit werden lokal unterschiedlich starke Beeinträchtigungen vermieden, welche ansonsten den Membranaufbau in seiner Beständigkeit oder in anderen Funktionen beeinträchtigen könnten.

Diese Vorteile können erzielt werden, da die Erfindung mehrere Effekte auf innovative Weise miteinander verknüpft: Durch die gegebene Wahl des Wärmeausdehnungskoeffizienten der ersten Schicht wirkt diese effektiv als Puffer für thermische Ausdehnungseffekte zwischen dem flexiblen Membranabschnitt und der zweiten Schicht. Mechanische Spannungen, welche ansonsten zwischen dem flexiblen Membranabschnitt und der zweiten Schicht aufgrund ihrer meist deutlich unterschiedlichen thermischen Ausdehnungskoeffizienten bei Temperaturänderungen auftreten könnten, wenn die erste Schicht nicht zwischen ihnen angeordnet wäre, werden somit drastisch reduziert. Solche mechanischen Spannungen werden im Folgenden auch als thermische Spannungen bezeichnet. Sie sind umso stärker ausgeprägt, desto größer der Unterschied der Wärmeausdehnungskoeffizienten angrenzender Schichten oder Materialien ist. Durch die erste Schicht wird die Gesamtdifferenz der thermischen Ausdehnungskoeffizienten zwischen flexiblem Membranabschnitt und zweiter Schicht quasi aufgeteilt auf zwei Grenzflächen mit jeweils geringerer Differenz und somit auch geringeren thermischen Spannungen. In Kombination mit der gewählten Permeabilität der zweiten Schicht führt dieser Effekt zu einer besonders wirksamen Reduzierung von Beeinträchtigungen durch Permeation des Wasserstoffes. Durch die Pufferung thermischer Spannungen durch die erste Schicht kann die zweite Schicht langfristig eine hohe Güte bewahren, das heißt, die zweite Schicht wird nicht oder zumindest deutlich weniger beeinträchtigt durch Mikro-Risse oder sonstige Beschädigungen, welchen ansonsten durch thermischen Spannungen langfristig oder auch schon im Rahmen der Herstellung des Schichtaufbaus entstehen könnten. Solche Mikro-Risse oder Beschädigungen können ansonsten zu einer über die Fläche des Schichtaufbaus ungleichmäßig ausgeprägten Permeation führen. Die erste Schicht trägt somit essentiell dazu bei, dass die zweite Schicht ihre geringe Permeabilität gleichmäßig über die ganze Fläche des Schichtaufbaus zur Wirkung bringen kann.

Wasserstoff, insbesondere gasförmiger Wasserstoff, ist ein wichtiger Bestandteil zahlreicher industrieller Prozesse. Membranvorrichtungen, wie sie aus dem Stand der Technik bekannt sind, können durch die Permeation von Wasserstoff, insbesondere durch lokal ungleichmäßige Permeation, nachteilig beeinträchtigt werden. Wenn beispielsweise solche Membranvorrichtungen ein Sensorelement bilden, kann die durch eine Leiterbahnenschicht gebildete Messschaltung dieses Sensorelements durch die Permeationseffekte verstimmt oder verändert werden, sodass eine Messgenauigkeit und Signalstabilität langfristig gefährdet sein kann. Aufgrund der Ausbildung des Drucksensors weist die zweite Schicht eine Permeabilität gegenüber Wasserstoffmolekülen auf, welche geringer ist als die entsprechende Permeabilität des flexiblen Membranabschnitts. In Kombination mit der ersten Schicht, welche wirksam verschiedene Formen von unerwünschten mechanischen Spannung in der zweiten Schicht reduziert (also zum Beispiel thermische Spannungen und/oder intrinsische Spannungen) und somit einer Bildung von Mikro-Rissen und anderen Beschädigungen entgegenwirkt, kann die zweite Schicht ihre Sperrwirkung gegenüber der Permeation von Wasserstoff optimal entfalten.

In einer exemplarischen Ausgestaltung des Drucksensors ist die Permeabilität der zweiten Schicht oder einer von der zweiten Schicht umfassten Unterschicht gegenüber Wasserstoff mindestens um einen Faktor 100, bevorzugt mindestens um einen Faktor 1000, besonders bevorzugt mindestens um einen Faktor 10⁶ geringer als die entsprechende Permeabilität des Membranabschnitts. Durch diese Ausgestaltung kann eine Sperrwirkung der zweiten Schicht gegenüber Permeation besonders wirksam erzielt werden.

Wenn in dieser Schrift von der ersten Schicht beziehungsweise der zweiten Schicht gesprochen wird, dann ist damit jeweils wenigstens eine homogene Schicht gemeint, welche aus einem konkreten Material besteht. Wenn hingegen - wie im vorangegangenen Abschnitt und in folgenden Abschnitten - von einer Unterschicht oder mehreren Unterschichten der ersten Schicht beziehungsweise der zweiten Schicht gesprochen wird, dann sind damit jeweils eine oder mehrere Schichten aus einem Schichtstapel aus verschiedenen Materialien gemeint. So kann in solchen exemplarischen Ausführungsformen die erste Schicht beziehungsweise die zweite Schicht jeweils einen Stapel verschiedener Unterschichten umfassen, wobei jedoch jede Unterschicht stets alle Anforderungen erfüllt, welche auch eine einzelne erste Schicht beziehungsweise zweite Schicht erfüllen muss.

In einer weiteren exemplarischen Ausgestaltung des Drucksensors weist die erste Schicht oder eine von der ersten Schicht umfasste Unterschicht eine Strukturkonstante auf, deren Wert zwischen den Werten der gleichen Strukturkonstante des Membranabschnitts und der zweiten Schicht liegt. Diese Strukturkonstante kann insbesondere eine Gitterkonstante der abgeschiedenen Schichten oder ein mittlerer Atomabstand innerhalb der Schichten sein. Somit kann die zweite Schicht effektiv mechanische Spannungen verhindern oder zumindest drastisch reduzieren, welche ansonsten zwischen dem flexiblen Membranabschnitt und der zweiten Schicht aufgrund ungleicher Strukturkonstanten auftreten können. Solche mechanischen Spannungen treten nicht erst durch unterschiedliches Ausdehnungsverhalten bei Temperaturänderung auf, sondern entstehen grundsätzlich an Grenzschichten, wenn aneinander grenzende Schichten oder Materialien unterschiedliche Strukturkonstanten aufweisen. Daher werden diese mechanischen Spannungen im Folgenden auch als intrinsische Spannungen bezeichnet. Analog zur im Vorangehenden beschriebenen Wirkungsweise der ersten Schicht als Pufferschicht für thermische Spannungen kann die erste Schicht in dieser Ausgestaltung zusätzlich auch als Puffer für intrinsische Spannungen wirken und somit eine weitere Ursache für Mikro-Risse und sonstige Beschädigungen ausschließen oder zumindest deutlich in ihrer Auswirkung reduzieren.

In einer weiteren exemplarischen Ausgestaltung des Drucksensors weist die erste Schicht oder eine von der ersten Schicht umfasste Unterschicht gegenüber Wasserstoff eine Permeabilität auf, welche geringer ist als die entsprechende Permeabilität des Membranabschnitts ist. Dadurch kann bereits die erste Schicht oder eine entsprechende Unterschicht der ersten Schicht eine Sperrwirkung entfalten, also eine Permeation des Wasserstoffes wirksam verhindern oder zumindest deutlich verzögern. Dadurch kann die zweite Schicht noch wirksamer geschützt werden und der Membranaufbau in seiner Beständigkeit und in anderen Funktionen weiter verbessert werden.

In einer weiteren exemplarischen Ausgestaltung des Drucksensors ist die Permeabilität der ersten Schicht oder einer von der ersten Schicht umfassten Unterschicht gegenüber Wasserstoff mindestens um einen Faktor 100, bevorzugt mindestens um einen Faktor 1000, besonders bevorzugt mindestens um einen Faktor 10⁶ geringer als die entsprechende Permeabilität des Membranabschnitts und/oder geringer als die entsprechende Permeabilität der zweiten Schicht. Durch diese Ausgestaltung kann eine Sperrwirkung der ersten Schicht gegenüber Permeation besonders wirksam erzielt werden.

In einer weiteren exemplarischen Ausgestaltung des Drucksensors weist die erste Schicht oder eine von der ersten Schicht umfasste Unterschicht gegenüber Wasserstoff eine Permeabilität auf, welche höher ist als die entsprechende Permeabilität des Membranabschnitts. Dadurch kann eine erhöhte, beschleunigte Durchdringungen der ersten Schicht erzielt werden, sodass in der Anwendung, wenn die erste Seite des Membranabschnitts Wasserstoff ausgesetzt ist, sich nach einer gewissen Zeit im Wesentlichen eine homogene, gleichmäßige Durchdringung der ersten Schicht mit Atomen oder Molekülen des Wasserstoffes ergibt. Dies führt wiederum zu einer gleichmäßigeren Permeation in bzw. durch die zweite Schicht. Somit kann eine ungleichmäßige, das heißt lokal unterschiedlich stark ausgeprägte Permeation oder Beeinträchtigung der zweiten Schicht durch Wasserstoff wirksam verhindert oder zumindest deutlich reduziert werden. Dadurch wird die ganze Membranvorrichtung und insbesondere aber die zweite Schicht in ihrer Beständigkeit und in anderen Funktionen verbessert.

In einer weiteren exemplarischen Ausgestaltung des Drucksensors ist die Permeabilität der ersten Schicht oder einer von der ersten Schicht umfassten Unterschicht gegenüber Wasserstoff mindestens um einen Faktor 100, bevorzugt mindestens um einen Faktor 1000, besonders bevorzugt mindestens um einen Faktor 10⁶ größer ist als die entsprechende Permeabilität des Membranabschnitts und/oder als die entsprechende Permeabilität der zweiten Schicht. Durch diese Ausgestaltung kann die im vorangehenden Abschnitt beschriebene gleichmäßigere Permeation besonders wirksam erzielt werden.

In einer weiteren exemplarischen Ausgestaltung des Drucksensors ist die erste Schicht oder eine von der ersten Schicht umfasste Unterschicht eine Haftvermittlungsschicht.

Eine Haftvermittlungsschicht ist dadurch gekennzeichnet, dass sie zwischen zwei Schichten verschiedener Materialien angeordnet ist und dabei an beiden Schichten, also an den jeweiligen Grenzflächen zu den beiden angrenzenden Schichten, eine stabile Haftwirkung entfaltet. Die Haftvermittlungsschicht ist dabei beispielsweise unmittelbar auf dem flexiblen Membranabschnitt angeordnet und kann somit in vorteilhafter Weise dazu beitragen, dass weitere Unterschichten der ersten Schicht oder auch die folgende zweite Schicht stabil aufeinander und somit letztlich stabil auf dem flexiblen Membranabschnitt haften. Schädigungen des Schichtaufbaus, wie etwa Abblättern einzelner Schichten, können dadurch wirksam verhindert oder reduziert werden.

In einer weiteren exemplarischen Ausgestaltung des Drucksensors umfasst die erste Schicht mindestens zwei Unterschichten, deren Wärmeausdehnungskoeffizienten verschieden sind, jedoch beide zwischen den Werten der Wärmeausdehnungskoeffizienten des Membranabschnitts und der zweiten Schicht liegen. Die Unterschichten sind derart aufeinanderfolgend auf dem Membranabschnitt aufgebracht, dass die Unterschicht, welche der zweiten Seite des Membranabschnitts am nächsten kommt, sich in ihrem Wärmeausdehnungskoeffizient am wenigsten vom jenem des Membranabschnitts unterscheidet und sich jede folgende Unterschicht in ihrem Wärmeausdehnungskoeffizient stärker vom Membranabschnitt unterscheidet, als die jeweils vorangegangene. Durch diese Ausgestaltung kann die Pufferwirkung bezüglich thermischer Spannungen zwischen dem Membranabschnitt und der zweiten Schicht durch die erste Schicht noch weiter verbessert werden. Die Gesamtdifferenz der thermischen Ausdehnungskoeffizienten zwischen flexiblem Membranabschnitt und zweiter Schicht werden hier auf eine noch größere Anzahl (im Vergleich zu Ausführungsformen mit nur einer einlagigen ersten Schicht) von Zwischenschritten beziehungsweise Zwischengrenzflächen aufgeteilt und dadurch können an den einzelnen Grenzflächen zwischen den Unterschichten der ersten Schicht, sowie der zweiten Schicht die jeweiligen Differenzen der Wärmeausdehnungskoeffizienten und somit auch die thermischen Spannungen noch weiter reduziert werden.

In einer weiteren exemplarischen Ausgestaltung des Drucksensors weist die erste Schicht eine Dicke zwischen 10 nm und 5000 nm auf. Durch eine solche Schichtdicke können die in vorangehenden Abschnitten beschriebenen Wirkungen und Vorteile, welche in Verbindung mit der ersten Schicht auftreten können, besonders effektiv erreicht werden.

In einer weiteren exemplarischen Ausgestaltung des Drucksensors weist die zweite Schicht oder eine von der zweiten Schicht umfasste Unterschicht einen elektrischen Widerstand auf, welcher größer ist als 10 MOhm, insbesondere größer ist als 100 MOhm (MOhm bedeutet 1.000.000 Ohm). Mit dem elektrischen Widerstand der zweiten Schicht oder einer von der zweiten Schicht umfassten Unterschicht ist dabei ein Widerstand zwischen einer unteren Seite der jeweiligen Schicht, welche in Richtung der ersten Schicht weist, und einer oberen Seite der jeweiligen Schicht, welche von der ersten Schicht abgewandt ist, gemeint. Eine derartige zweite Schicht oder Unterschicht der zweiten Schicht kann auch als Isolationsschicht bezeichnet werden. Diese Isolationsschicht kann vorteilhaft weitere, auf die zweite Schicht folgende Schichten, wie zum Beispiel eine Leiterbahnenschicht, von gegebenenfalls leitenden, unter ihr liegenden Schichten oder von dem flexiblen Membranabschnitt wirksam elektrisch isolieren. Beispielsweise kann eine Isolationsschicht aus SiO₂ gebildet werden, welches zudem eine sehr niedrige Permeabilität gegenüber flüchtigen Stoffen, wie etwa Wasserstoff, aufweist.

Weiterhin ist vorgesehen, dass eine Leiterbahnenschicht unmittelbar oder mittelbar auf der als Isolationsschicht ausgebildeten oder eine Isolationsschicht umfassenden zweiten Schicht aufgebracht ist. Dadurch kann die Membranvorrichtung vorteilhaft weitere Funktionen erhalten. So kann zum Beispiel durch die Leiterbahnenschicht eine Messbrücke erzeugt werden, welche lokale Dehnungen oder Streckungen der Oberfläche des flexiblen Membranabschnitts in messbare elektrische Größen umwandelt. Dadurch kann die Membranvorrichtung als Sensorelement für Druckmessungen verwendet werden, wenn die erste Seite der Membranvorrichtung dem unter Druck stehenden Wasserstoff ausgesetzt wird und sich dabei elastisch verformt. Durch den Schichtaufbau kann die Leiterbahnenschicht effektiv vor Beeinträchtigungen durch Beeinträchtigungen durch Permeation des Wasserstoffes geschützt werden.

In einer solchen Anwendung können die Eigenschaften der Membranvorrichtung besonders vorteilhaft ausgenutzt werden: Die Puffer-Wirkung der ersten Schicht bezüglich thermischer Spannung und gegebenenfalls auch gegenüber intrinsischen Spannungen, welchen in vorangegangenen Abschnitten im Hinblick auf verschiedene Ausgestaltungen der Membranvorrichtung bereits diskutiert wurde, reduzieren zunächst ganz allgemein die Empfindlichkeit eines durch die Membranvorrichtung gebildeten Sensorelements gegenüber Umwelteinflüssen, wie etwa Temperaturschwankungen. Dadurch kann ein solches Sensorelement eine höhere Zuverlässigkeit, Stabilität und Messgenauigkeit erzielen.

Darüber hinaus kann durch die Kombination der ersten und zweiten Schicht, wie in vorangegangenen Abschnitten im Hinblick auf verschiedene Ausgestaltungen der Membranvorrichtung bereits diskutiert, eine sehr wirksame Sperrwirkung gegenüber der Permeation des Wasserstoffs erzielt werden oder die Permeation wird zumindest deutlich verringert. Weiterhin oder alternativ kann eine lokal ungleichmäßige Permeation reduziert werden, das heißt, die zweite Schicht und die darüber angeordnete Leiterbahnenschicht werden gleichmäßiger permeiert. Somit können Beeinträchtigungen der über der zweiten Schicht angeordneten Leiterbahnenschicht durch Permeationseffekte deutlich reduziert werden und ein durch den Membranaufbau gebildetes Sensorelement kann eine deutlich bessere Langzeitstabilität und Messgenauigkeit erzielen.

In einer exemplarischen Weiterbildung der vorangehend genannten Ausgestaltung des Drucksensors weist die erste Schicht eine Dicke zwischen 10 nm und 500 nm auf, insbesondere eine Dicke zwischen 20 nm und 200 nm. Durch eine solche Schichtdicke können, wie schon in Bezug auf eine andere vorangegangene exemplarische Ausgestaltung mit einem noch größeren Schichtdickenbereich erläutert, die in vorangehenden Abschnitten beschriebenen Wirkungen und Vorteile, welche in Verbindung mit der ersten Schicht auftreten können, besonders effektiv erreicht werden. Zusätzlich kann der hier enger definierte Schichtdickenbereich weitere vorteilhafte Eigenschaften entfalten, welche nur in Verbindung mit der Leiterbahnenschicht zu Tage treten: Wie bereits erläutert, ist im Stand der Technik das sogenannte Laser-Trimmen bekannt. Dieses Verfahren wird im Kontext dieser Schrift dazu genutzt, um Leiterbahnen der Leiterbahnenschicht zu manipulieren. Ist in der Leiterbahnenschicht zum Beispiel eine Wheatstone-Messbrücke durch eine Verschaltung von Widerstandsbahnen ausgebildet, kann durch das Laser-Trimmen der Widerstandswert einzelner Widerstandsbahnen exakt eingestellt werden, indem sogenannte Trimm-Schnitte mittels Laserstrahlung in die Widerstandsbahnen eingebracht werden. Bei diesem Verfahren trifft üblicherweise auch ein Teil der Laserstrahlung auf die unter der Leiterbahnenschicht liegenden Schichten. Für die zweite Schicht als Permeationssperrschicht und Isolationsschicht in Frage kommende Materialien sind in der Regel transparent für die Laserstrahlung, was insbesondere für SiO₂ (Siliziumdioxid) gilt. Somit trifft ein Teil der Laserstrahlung auf die darunter liegende erste Schicht. Wenn diese eine Schichtdicke gemäß dieser Weiterbildung aufweist, kann wirksam verhindert werden, dass sich die erste Schicht durch die Laserstrahlung erhitzt und in Folge einer starken Erhitzung beschädigt wird. Stattdessen kann die durch die Laserstrahlung eingetragene Wärme effektiv auf das unter der ersten Schicht liegende Substrat, das heißt auf den Membranabschnitt, abgeleitet werden. Der Membranabschnitt wirkt somit als Wärmesenke. Wird die erste Schicht hingegen zu dick ausgeführt, kann die Wärme nicht schnell genug abfließen und es entstehen Schäden an der ersten Schicht. Ist die erste Schicht wiederum zu dünn ausgeführt, können die gewünschten Wirkungen der ersten Schicht, insbesondere eine effektive Reduzierung von thermischen und/oder intrinsischen Spannungen, nicht in hinreichendem Maße erreicht werden.

In einer weiteren exemplarischen Weiterbildung der vorangehend genannten Ausgestaltung des Drucksensors umfasst diese eine Schutzschicht, welche unmittelbar oder mittelbar auf der Leiterbahnenschicht aufgebracht ist und diese zumindest abschnittsweise überdeckt. Dadurch kann die Leiterbahnenschicht effektiv vor Beschädigungen geschützt werden. Einzelne Flächenabschnitte können dabei von der Schutzschicht freigestellt sein, um beispielsweise Kontaktflächen zur elektrischen Kontaktierung der Leiterbahnenschicht zugänglich sind. Bei der Schutzschicht kann es sich um einen Lack handeln, oder auch um eine Passivierungsschicht, welche beispielsweise mittels Dünnschichttechnik über der Leiterbahnenschicht aufgebracht wird.

In einer weiteren exemplarischen Ausgestaltung des Drucksensors ist das Material, aus welchem die zweite Schicht oder eine von der zweiten Schicht umfasste Unterschicht besteht, durch die Formel AlₓSi_{y}(O,N)_{1-x-y} beschrieben, wobei x und y atomare Anteile zwischen 0 und 1 sind und in Summe stets kleiner oder gleich 1 sind. Si, Al, O und N stehen hierbei für die chemischen Elemente Silizium, Aluminium, Sauerstoff und Stickstoff. Die Schreibweise (O,N) bedeutet in dieser Formel, dass entweder Sauerstoff oder Stickstoff Teil der Verbindung ist. Das dieser Formel entsprechende Material beziehungsweise diese Materialgruppe weist gegenüber vielen anderen Stoffen eine sehr niedrige Permeabilität auf und eignet sich daher besonders gut dazu, für die zweite Schicht der Membranvorrichtung verwendet zu werden. In Anwendungen, in denen das Prozessmedium Wasserstoff ist oder Wasserstoff die Komponente des Prozessmediums ist, welche an einer Permeation durch den Schichtaufbau gehindert werden soll, kann beispielsweise Siliziumdioxid (SiO₂) besonders vorteilhaft verwendet werden, da es eine niedrige Permeabilität gegenüber Wasserstoff aufweist und zugleich in der Dünnfilmtechnologie bereits sehr stark etabliert ist und somit kostengünstig eingesetzt werden kann.

In einer weiteren exemplarischen Ausgestaltung des Drucksensors ist das Material, aus welchem der flexible Membranabschnitt besteht, ein Edelstahl, insbesondere ein austenitischer Stahl, oder eine Speziallegierung, insbesondere Elgiloy, Hasteloy, 316L oder 1.4404. Diese Materialien zeichnen sich durch eine hohe mechanische und/oder chemische Beständigkeit aus und können somit vorteilhaft für eine Membranvorrichtung verwendet werden, deren erste Seite mit Prozessmedien in Berührung kommt, welche eine hohe Temperatur und/oder einen hohen Druck aufweisen oder chemisch und/oder mechanisch abrasiv wirken.

In einer weiteren exemplarischen Ausgestaltung des Drucksensors ist das Material, aus welchem die erste Schicht oder zumindest eine von der ersten Schicht umfasste Unterschicht besteht, durch die Formel MₓN_{y}O_{z}C_{1-x-y-z} definiert, wobei x, y, und z atomare Anteile zwischen 0 und 1 sind, die in Summe stets kleiner oder gleich 1 sind. Die Zeichen N, O und C stehen für die chemischen Elemente Stickstoff, Sauerstoff und Kohlenstoff. Das Zeichen M steht für Elemente Aluminium (Al), Chrom (Cr), Titan (Ti), Molybdän (Mo), Wolfram (W), Hafnium (Hf), oder Zirconium (Zr). Die derart definierte Materialgruppe eignet sich besonders für die Verwendung als erste Schicht, da durch sie für eine Vielzahl an Materialkombinationen von Membranabschnitt und zweiter Schicht zumindest die Bedingung bezüglich der Wärmeausdehnungskoeffizienten erfüllt werden kann. Dies gilt insbesondere, wenn das jeweilige Material des flexiblen Membranabschnitts und der zweiten Schicht aus den vorangehend genannten Materialgruppen gewählt ist. Eine entsprechende Auswahl kann mithilfe von Literaturwerten oder anhand von experimentellen Bestimmungen erfolgen.

Alternativ kann das Material, aus welchem die erste Schicht oder zumindest eine von der ersten Schicht umfasste Unterschicht besteht, eines der Metalle mit chemischem Elementsymbol Be, Sc, Ti, V, Cr, Fe, Ge, Zr, Nb, Mo, Ru, Rh, Pd, Ce, Pr, Nd, Pm, Gd, Tb, Dy, Ho, Lu, Hf, Ta, W, Re, Os, Ir, Pt oder Th sein, oder eine Eisen-KohlenstoffLegierung, eine Nickel-Basislegierung, ein Edelstahl, eine Titan-Legierung oder Kovar sein, oder eines der Materialien mit chemischem Bindungszeichen Si3N4, SiC, TiN, TiC, AlN, Al2O3, ZrO2, BaTiO3, Cr2O3, TiAlN oder ZrN sein. Auch diese Materialien eignen sich besonders gut als erste Schicht, da sie für eine Vielzahl an Materialkombinationen von Membranabschnitt und zweiter Schicht zumindest die Bedingung bezüglich der Wärmeausdehnungskoeffizienten erfüllen können. Dies gilt insbesondere, wenn das jeweilige Material des flexiblen Membranabschnitts und der zweiten Schicht aus den vorangehend genannten Materialgruppen gewählt ist. Eine entsprechende Auswahl kann mithilfe von Literaturwerten oder anhand von experimentellen Bestimmungen erfolgen. Besonders bevorzugt ist Titan oder Titannitrid zu verwenden, da sich dieses Material beispielsweise auch als Haftvermittlungsschicht eignet, insbesondere bei einer Verwendung von den genannten Speziallegierungen für den flexiblen Membranabschnitt.

Ein weiterer Aspekt der Erfindung betrifft einen Druckmittler, welcher eine analog zu der Membranvorrichtung des Drucksensors gemäß dem ersten Aspekt der vorliegenden Erfindung oder einer der im vorangehenden Abschnitt oder einem der vorangehenden Abschnitte genannten exemplarischen Ausgestaltungen oder Weiterbildungen des Drucksensors umfasst.

In einer weiteren exemplarischen Ausgestaltung des Drucksensors besteht der flexible Membranabschnitt aus einem Edelstahl oder einer Speziallegierung, die erste Schicht aus Titan oder Titannitrid und die zweite Schicht aus Siliziumdioxid. Durch eine solche Materialwahl können die in vorangehenden Abschnitten besprochenen Vorteile der Erfindung und ihrer exemplarischen Ausgestaltungen besonders wirksam realisiert werden, während der Schichtaufbau gleichzeitig kostengünstig und effizient durch Verfahren der Dünnfilmtechnik hergestellt werden kann. Dieser Drucksensor, insbesondere mit der vorangehend genannten exemplarischen Materialkombination, kann sich insbesondere vorteilhaft für eine Verwendung in Verbindung mit dem Prozessmedium Wasserstoff oder einem wasserstoffhaltigen Prozessmedium eignen und eine Permeation von Wasserstoff durch den Schichtaufbau verhindern oder zumindest stark reduzieren.

### KURZBESCHREIBUNG DER ZEICHNUNGEN

Exemplarische Ausgestaltungen und Ausführungsbeispiele der Erfindung werden im Folgenden anhand von Zeichnungen näher erläutert. Dabei zeigen:
- Figur 1 und 2: schematisch Querschnitte einer Membranvorrichtung,
- Figur 3 und 4B: einen Drucksensor mit einer Membranvorrichtung in Querschnittsdarstellungen,
- Figur 4A: eine perspektivische Darstellung eines Drucksensors mit einer Membranvorrichtung und
- Figur 5: schematisch einen Querschnitt eines Druckmessgeräts mit einem Drucksensor.

Einander entsprechende Teile sind in allen Figuren mit den gleichen Bezugszeichen versehen.

### DETAILBESCHREIBUNG DER ZEICHNUNGEN

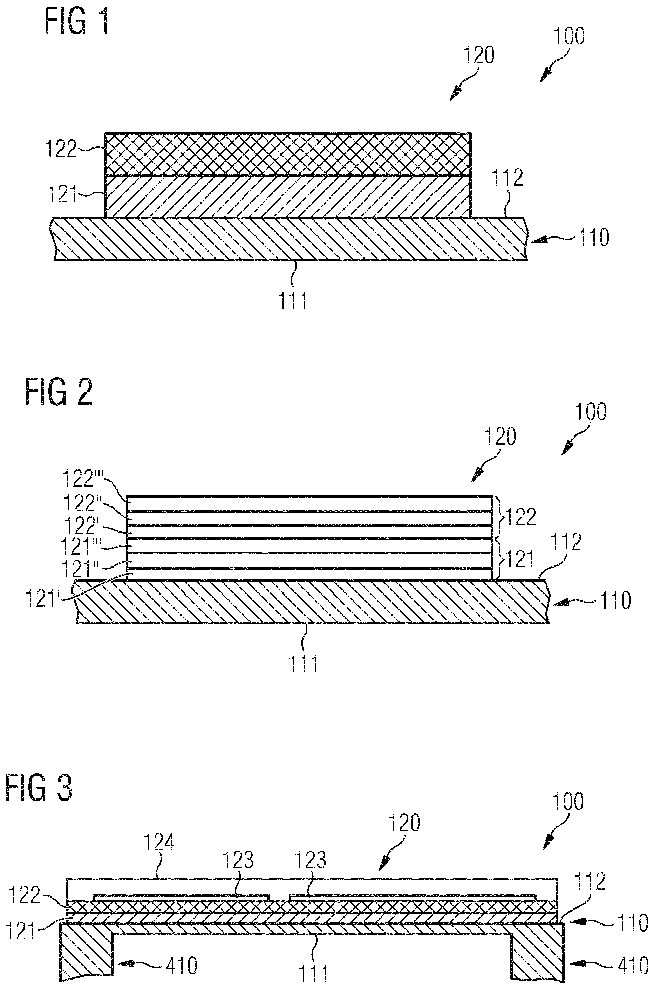

Die Figuren 1 und 2 zeigen eine Membranvorrichtung 100 mit einem ausschnittsweise dargestellten flexiblen Membranabschnitt 110. Auf einer zweiten Seite 112 des Membranabschnitts 110 ist ein Schichtaufbau 120 mit einer ersten Schicht 121 und einer zweiten Schicht 122 angeordnet. Eine erste Seite 111 des Membranabschnitts 110 kann in nicht näher dargestellter Weise einem Prozessmedium 200 ausgesetzt sein.

In Figur 2 umfassen die erste Schicht 121 und die zweite Schicht 122 jeweils mehrere Unterschichten 121', 121", 121‴, 122', 122", 122‴.

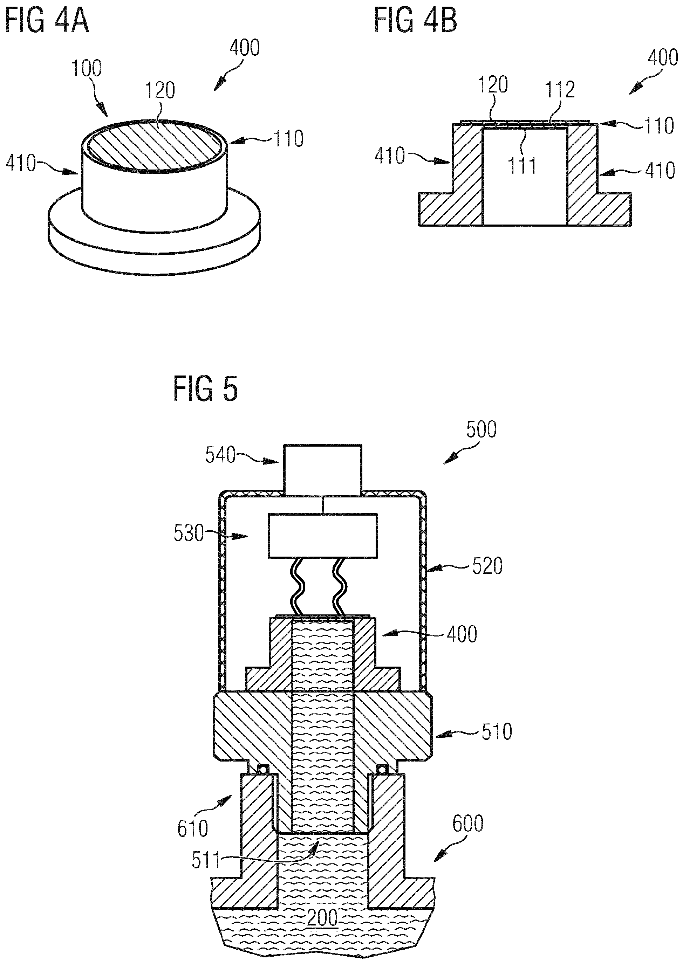

Die Figuren 3, 4A und 4B zeigen jeweils einen Drucksensor 400, welcher eine Membranvorrichtung 100 umfasst. Der Drucksensor 400 ist in Form einer Druckmesskapsel ausgebildet. Dabei trägt eine massiver, starrer Randbereich 410 in Form eines Hohlzylinders den flexiblen Membranabschnitt 110.

In Figur 3 ist der Schichtaufbau 120 in einem Querschnitt detaillierter dargestellt. Auf der zweiten Schicht 122 ist eine Leiterbahnenschicht 123, sowie darüber wiederum eine Schutzschicht 124 aufgebracht.

In Figur 5 ist ein Druckmessgerät 500 schematisch im Querschnitt dargestellt. Es umfasst ein Anschlussteil 510 sowie ein Messgerätgehäuse 520. Über das Anschlussteil 510 ist das Druckmessgerät 500 an einen Messanschluss 610 einer Prozessanlage 600 angeschlossen, beispielsweise über einen Gewindeanschluss. Das Anschlussteil 510 weist eine Zugangsöffnung 511 auf, über welche ein Prozessmedium 200 aus der Prozessanlage 600 einem Drucksensor 400 zugeführt wird. Der Drucksensor 400 kann dabei entsprechend zu den Figuren 4A und 4B ausgeführt sein. Er umfasst einen flexiblen Membranabschnitt 110 mit einem Schichtaufbau 120, wobei der Schichtaufbau 120 beispielsweise gemäß der Ausführungsform von Figur 3 ausgebildet ist. In einer Leiterbahnenschicht 123 des Schichtaufbaus 120 ist eine Messbrücke mit piezoresistiven Widerstandsbahnen ausgebildet, welche eine messtechnische Erfassung einer Verformung des Membranabschnitts 120 ermöglicht, die daraus resultiert, dass das Prozessmedium 200 gegen die erste Seite 111 des Membranabschnitts 120 ansteht. Die Leiterbahnenschicht 123 ist durch schematisch angedeutete Leitungen, beispielsweise durch sogenannte Bond-Drähte, mit einer schematisch dargestellten Auswerteelektronik 530 des Druckmessgeräts 500 verbunden, welche die elektrischen Eigenschaften der Messbrücke ausmisst und daraus einen Messwert, insbesondere einen Druck des Prozessmediums 200, ableitet. Ein diesen Messwert repräsentierendes Messwertsignal wird über eine Kommunikationsschnittstelle 540 bereitgestellt, beispielsweise über eine Steckerbuchse mit mindestens einem elektronischen Kontakt, oder als Funksignal.

Die Erfindung ist nicht auf die vorangegangenen Ausführungsbeispiele beschränkt. Sie kann in dem Umfang der nachfolgenden Ansprüche modifiziert werden. Ebenso können einzelne Aspekte aus den Unteransprüchen miteinander kombiniert werden, insofern diese sich nicht logisch ausschließen.

### BEZUGSZEICHENLISTE

- 100: Membranvorrichtung
- 110: Membranabschnitt
- 111: Erste Seite des Membranabschnitts
- 112: Zweite Seite des Membranabschnitts
- 120: Schichtaufbau
- 121: Erste Schicht
- 121', 121", 121‴: Unterschichten der ersten Schicht
- 122: Zweite Schicht
- 122', 122", 122‴: Unterschichten der zweiten Schicht
- 123: Leiterbahnenschicht
- 124: Schutzschicht
- 200: Prozessmedium
- 300: Druckmittler
- 400: Drucksensor
- 410: Randbereich
- 500: Druckmessgerät
- 510: Anschlussteil
- 511: Zugangsöffnung
- 520: Messgerätgehäuse
- 530: Auswerteelektronik
- 540: Kommunikationsschnittstelle
- 600: Prozessanlage
- 610: Messanschluss

## Patentansprüche

1. Drucksensor (400) mit einer Membranvorrichtung (100) mit einem flexiblen Membranabschnitt (110), wobei
- eine erste Seite (111) des Membranabschnitts einem Prozessmedium (200), welches Wasserstoff oder wasserstoffhaltig ist, ausgesetzt ist oder dafür vorgesehen ist, einem Prozessmedium (200), welches Wasserstoff oder wasserstoffhaltig ist, ausgesetzt zu werden,
- eine zweite Seite (112) des Membranabschnitts einen Schichtaufbau (120) aufweist,
- der Schichtaufbau (120) zumindest eine erste Schicht (121) und eine zweite Schicht (122) umfasst,
- die erste Schicht (121) einen Wärmeausdehnungskoeffizient aufweist, dessen Wert zwischen den Werten der Wärmeausdehnungskoeffizienten von Membranabschnitt (110) und zweiter Schicht (122) liegt,
- die zweite Schicht (122) gegenüber Wasserstoff eine Permeabilität aufweist, welche geringer ist als die entsprechende Permeabilität des Membranabschnitts (110),
- die erste Schicht (121) unmittelbar oder mittelbar auf dem Membranabschnitt (110) aufgebracht ist und die zweite Schicht (122) unmittelbar oder mittelbar auf der ersten Schicht (121) aufgebracht ist, wobei die erste Schicht (121) zwischen dem Membranabschnitt (110) und der zweiten Schicht (122) angeordnet ist,
- eine Leiterbahnenschicht (123) unmittelbar oder mittelbar auf der zweiten Schicht (122) aufgebracht ist, wobei in der Leiterbahnenschicht (123) eine Messbrücke mit piezoresistiven Widerstandsbahnen ausgebildet ist, und
- eine Schutzschicht (124) unmittelbar oder mittelbar auf der Leiterbahnenschicht (123) aufgebracht ist und diese zumindest abschnittsweise überdeckt.

2. Drucksensor (400) nach Anspruch 1, wobei die Permeabilität der zweiten Schicht (122) oder einer von der zweiten Schicht (122) umfassten Unterschicht (122', 122", 122‴) gegenüber Wasserstoff mindestens um einen Faktor 100, bevorzugt mindestens um einen Faktor 1000, besonders bevorzugt mindestens um einen Faktor 10⁶ geringer ist als die entsprechende Permeabilität des Membranabschnitts (110).

3. Drucksensor (400) nach einem der vorangehenden Ansprüche, wobei die erste Schicht (121) oder eine von der ersten Schicht (121) umfasste Unterschicht (121', 121", 121‴) eine Strukturkonstante aufweist, deren Wert zwischen den Werten der gleichen Strukturkonstante des Membranabschnitts (110) und der zweiten Schicht (122) liegt, wobei diese Strukturkonstante insbesondere eine Gitterkonstante oder ein mittlerer Atomabstand ist.

4. Drucksensor (400) nach einem der vorangehenden Ansprüche, wobei die erste Schicht (121) oder eine von der ersten Schicht (121) umfasste Unterschicht (121', 121", 121‴) gegenüber Wasserstoff eine Permeabilität aufweist, welche geringer ist als die entsprechende Permeabilität des Membranabschnitts (110),
wobei die Permeabilität der ersten Schicht (121) oder der von der ersten Schicht (121) umfassten Unterschicht (121', 121", 121‴) gegenüber Wasserstoff insbesondere mindestens um einen Faktor 100, bevorzugt mindestens um einen Faktor 1000, besonders bevorzugt mindestens um einen Faktor 10⁶ geringer ist als die entsprechende Permeabilität des Membranabschnitts (110) und/oder als die entsprechende Permeabilität der zweiten Schicht (122).

5. Drucksensor (400) nach einem der Ansprüche 1 bis 3, wobei die erste Schicht (121) oder eine von der ersten Schicht (121) umfasste Unterschicht (121', 121", 121‴) gegenüber Wasserstoff eine Permeabilität aufweist, welche höher ist als die entsprechende Permeabilität des Membranabschnitts (110),
wobei die Permeabilität der ersten Schicht (121) oder der von der ersten Schicht (121) umfassten Unterschicht (121', 121", 121‴) gegenüber Wasserstoff insbesondere mindestens um einen Faktor 100, bevorzugt mindestens um einen Faktor 1000, besonders bevorzugt mindestens um einen Faktor 10⁶ größer ist als die entsprechende Permeabilität des Membranabschnitts (110) und/oder als die entsprechende Permeabilität der zweiten Schicht (122).

6. Drucksensor (400) nach einem der vorangehenden Ansprüche, wobei die erste Schicht (121) mindestens zwei Unterschichten (121', 121", 121‴) umfasst, deren Wärmeausdehnungskoeffizienten zwischen den Werten der Wärmeausdehnungskoeffizienten des Membranabschnitts (110) und der zweiten Schicht (122) liegen und wobei die Unterschichten (121', 121", 121‴) derart aufeinanderfolgend auf dem Membranabschnitt (110) aufgebracht sind, dass die Unterschicht (121'), welche der zweiten Seite (112) des Membranabschnitts am nächsten kommt, sich in ihrem Wärmeausdehnungskoeffizient am wenigsten vom Membranabschnitt unterscheidet und sich jede folgende Unterschicht (121", 121‴) in ihrem Wärmeausdehnungskoeffizient stärker vom Membranabschnitt (110) unterscheidet, als die jeweils vorangegangene.

7. Drucksensor (400) nach einem der vorangehenden Ansprüche, wobei die erste Schicht (121) eine Dicke zwischen 10 nm und 5000 nm, insbesondere zwischen 10 nm und 500 nm, insbesondere zwischen 20 nm und 200 nm aufweist.

8. Drucksensor (400) nach einem der vorangehenden Ansprüche, wobei die zweite Schicht (122) oder eine von der zweiten Schicht (122) umfasste Unterschicht (122', 122", 122‴) einen elektrischen Widerstand aufweist, welcher größer ist als 10 MOhm, insbesondere größer ist als 100 MOhm.

9. Drucksensor (400) nach einem der vorangehenden Ansprüche, wobei das Material, aus dem die zweite Schicht (122) oder eine von der zweiten Schicht (122) umfasste Unterschicht (122', 122", 122‴) besteht, durch die Formel AlₓSi_{y}(O,N)_{1-x-y} beschrieben ist, wobei
- x und y atomare Anteile zwischen 0 und 1 sind und in Summe stets kleiner oder gleich 1 sind,
- Si Silizium ist,
- Al Aluminium ist,
- O Sauerstoff ist und
- N Stickstoff ist.

10. Drucksensor (400) nach einem der vorangehenden Ansprüche, wobei das Material, aus welchem der Membranabschnitt (110) besteht,
- ein Edelstahl, insbesondere ein austenitischer Stahl, oder
- eine Speziallegierung, insbesondere Elgiloy, Hasteloy, 316L oder 1.4404, ist.

11. Drucksensor (400) nach einem der vorangehenden Ansprüche, wobei das Material, aus welchem die erste Schicht (121) oder eine von der ersten Schicht (121) umfasste Unterschicht (121', 121", 121‴) besteht, durch die Formel MₓN_{y}O_{z}C_{1-x-y-z} beschrieben ist, wobei
- x, y, und z atomare Anteile zwischen 0 und 1 sind, die in Summe stets kleiner oder gleich 1 sind,
- N Stickstoff ist,
- O Sauerstoff ist,
- C Kohlenstoff ist und
- M für eines der folgenden Elemente steht: Al, Cr, Ti, Mo, W, Hf, oder Zr,
und/oder wobei das Material, aus welchem die erste Schicht (121) oder eine von der ersten Schicht (121) umfasste Unterschicht (121', 121", 121‴) besteht,
- eines der Metalle Be, Sc, Ti, V, Cr, Fe, Ge, Zr, Nb, Mo, Ru, Rh, Pd, Ce, Pr, Nd, Pm, Gd, Tb, Dy, Ho, Lu, Hf, Ta, W, Re, Os, Ir, Pt oder Th ist, oder
- eine Fe-C-Legierung, eine Ni-Basislegierung, ein Edelstahl, eine Ti-Legierung oder Kovar ist, oder
- eines der Materialien Si₃N₄, SiC, TiN, TiC, AlN, Al₂O₃, ZrO₂, BaTiO₃, Cr₂O₃, TiAlN oder ZrN ist.

## Claims

1. Pressure sensor (400) having a membrane device (100) having a flexible membrane section (110), wherein
- a first side (111) of the membrane section is exposed to a process medium (200) which is hydrogen or contains hydrogen or is to be exposed to a process medium (200) which is hydrogen or contains hydrogen,
- a second side (112) of the membrane section has a layer structure (120),
- the layer structure (120) comprises at least a first layer (121) and a second layer (122),
- the first layer (121) has a coefficient of thermal expansion having a value between the values of the coefficients of thermal expansion of membrane section (110) and second layer (122),
- the second layer (122) has a permeability to hydrogen which is lower than the corresponding permeability of the membrane section (110),
- the first layer (121) has been applied directly or indirectly to the membrane section (110) and the second layer (122) has been applied directly or indirectly to the first layer (121), where the first layer (121) is between the membrane section (110) and the second layer (122),
- a conductor track layer (123) has been applied directly or indirectly to the second layer (122), forming a measurement bridge with piezoresistive resistance tracks in the conductor track layer (123), and
- a protective layer (124) has been applied directly or indirectly to the conductor track layer (123) and covers at least sections thereof.

2. Pressure sensor (400) according to Claim 1, wherein the permeability of the second layer (122) or of a sublayer (122', 122", 122‴) encompassed by the second layer (122) to hydrogen is lower at least by a factor of 100, preferably at least by a factor of 1000, more preferably by at least a factor of 10⁶, than the corresponding permeability of the membrane section (110).

3. Pressure sensor (400) according to either of the preceding claims, wherein the first layer (121) or a sublayer (121', 121", 121‴) encompassed by the first layer (121) has a structure constant having a value between the values of the same structure constant of the membrane section (110) and of the second layer (122), wherein this structure constant is in particular a lattice constant or an average atomic distance.

4. Pressure sensor (400) according to any of the preceding claims, wherein the first layer (121) or a sublayer (121', 121", 121‴) encompassed by the first layer (121) has a permeability to hydrogen which is lower than the corresponding permeability of the membrane section (110),
wherein the permeability of the first layer (121) or of the sublayer (121', 121", 121‴) encompassed by the first layer (121) to hydrogen is in particular lower at least by a factor of 100, preferably at least by a factor of 1000, more preferably by at least a factor of 10⁶, than the corresponding permeability of the membrane section (110) and/or than the corresponding permeability of the second layer (122).

5. Pressure sensor (400) according to any of Claims 1 to 3, wherein the first layer (121) or a sublayer (121', 121", 121‴) encompassed by the first layer (121) has a permeability to hydrogen which is higher than the corresponding permeability of the membrane section (110),
wherein the permeability of the first layer (121) or of the sublayer (121', 121", 121‴) encompassed by the first layer (121) to hydrogen is in particular greater at least by a factor of 100, preferably at least by a factor of 1000, more preferably by at least a factor of 10⁶, than the corresponding permeability of the membrane section (110) and/or than the corresponding permeability of the second layer (122).

6. Pressure sensor (400) according to any of the preceding claims, wherein the first layer (121) comprises at least two sublayers (121', 121", 121‴) having coefficients of thermal expansion between the values of the coefficients of thermal expansion of the membrane section (110) and of the second layer (122), and wherein the sublayers (121', 121", 121‴) have been applied successively to the membrane section (110) in such a way that the sublayer (12') that comes closest to the second side (112) of the membrane section has the least difference from the membrane section in terms of its coefficient of thermal expansion, and every subsequent sublayer (121", 121‴) has a greater difference from the membrane section (110) in terms of its coefficient of thermal expansion than the respective preceding sublayer.

7. Pressure sensor (400) according to any of the preceding claims, wherein the first layer (121) has a thickness between 10 nm and 5000 nm, in particular between 10 nm and 500 nm, in particular between 20 nm and 200 nm.

8. Pressure sensor (400) according to any of the preceding claims, wherein the second layer (122) or a sublayer (122', 122", 122‴) encompassed by the second layer (122) has an electrical resistance which is greater than 10 MOhm, in particular greater than 100 MOhm.

9. Pressure sensor (400) according to any of the preceding claims, wherein the material of which the second layer (122) or a sublayer (122', 122", 122‴) encompassed by the second layer (122) consists is described by the formula AlₓSi_{y}(O,N)_{1-x-y} where
- x and y are atomic proportions between 0 and 1 and are always less than or equal to 1 in total,
- Si is silicon,
- Al is aluminium,
- O is oxygen and
- N is nitrogen.

10. Pressure sensor (400) according to any of the preceding claims, wherein the material of which the membrane section (110) consists is
- a stainless steel, in particular an austenitic steel, or
- a specialty alloy, in particular Elgiloy, Hasteloy, 316L or 1.4404.

11. Pressure sensor (400) according to any of the preceding claims, wherein the material of which the first layer (121) or a sublayer (121', 121", 121‴) encompassed by the first layer (121) consists is described by the formula MₓN_{y}O_{z}C_{1-x-y-z} where
- x, y and z are atomic proportions between 0 and 1 that are always less than or equal to 1 in total,
- N is nitrogen,
- O is oxygen,
- C is carbon and
- M represents one of the following elements: Al, Cr, Ti, Mo, W, Hf, or Zr, and/or wherein the material of which the first layer (121) or a sublayer (121', 121", 121‴) encompassed by the first layer (121) consists is
- one of the metals Be, Sc, Ti, V, Cr, Fe, Ge, Zr, Nb, Mo, Ru, Rh, Pd, Ce, Pr, Nd, Pm, Gd, Tb, Dy, Ho, Lu, Hf, Ta, W, Re, Os, Ir, Pt or Th, or
- an Fe-C alloy, an Ni-base alloy, a stainless steel, a Ti alloy or Kovar, or
- one of the materials Si₃N₄, SiC, TiN, TiC, AlN, Al₂O₃, ZrO₂, BaTiO₃, Cr₂O₃, TiAlN or ZrN.

## Revendications

1. Capteur de pression (400) comprenant un dispositif à membrane (100) ayant une portion de membrane flexible (110),
- un premier côté (111) de la portion de membrane étant exposé à un fluide de processus (200), qui est de l'hydrogène ou contient de l'hydrogène, ou étant prévu pour être exposé à un fluide de processus (200), qui est de l'hydrogène ou contient de l'hydrogène,
- un deuxième côté (112) de la portion de membrane présentant une structure en couches (120),
- la structure en couches (120) comprenant au moins une première couche (121) et une deuxième couche (122),
- la première couche (121) présentant un coefficient de dilatation thermique dont la valeur est comprise entre les valeurs des coefficients de dilatation thermique de la portion de membrane (110) et de la deuxième couche (122),
- la deuxième couche (122) présentant une perméabilité à l'hydrogène qui est inférieure à la perméabilité correspondante de la portion de membrane (110),
- la première couche (121) étant appliquée directement ou indirectement sur la portion de membrane (110) et la deuxième couche (122) étant appliquée directement ou indirectement sur la première couche (121), la première couche (121) étant disposée entre la portion de membrane (110) et la deuxième couche (122),
- une couche de pistes conductrices (123) étant appliquée directement ou indirectement sur la deuxième couche (122), un pont de mesure pourvu de pistes de résistance piézorésistives étant formé dans la couche de pistes conductrices (123), et
- une couche de protection (124) étant appliquée directement ou indirectement sur la couche de pistes conductrices (123) et recouvrant celle-ci au moins par portions.

2. Capteur de pression (400) selon la revendication 1, la perméabilité à l'hydrogène de la deuxième couche (122) ou d'une sous-couche (122', 122", 122‴) comprise par la deuxième couche (122) étant inférieure d'au moins un facteur 100, de préférence d'au moins un facteur 1000, de manière particulièrement préférée d'au moins un facteur 10⁶ à la perméabilité correspondante de la portion de membrane (110).

3. Capteur de pression (400) selon l'une des revendications précédentes, la première couche (121) ou une sous-couche (121', 121", 121"') comprise par la première couche (121) présentant une constante de structure dont la valeur se situe entre les valeurs de la même constante de structure de la portion de membrane (110) et de la deuxième couche (122),
cette constante de structure étant notamment une constante de réseau ou une distance interatomique moyenne.

4. Capteur de pression (400) selon l'une des revendications précédentes, la première couche (121) ou une sous-couche (121', 121", 121"') comprise par la première couche (121) présentant une perméabilité à l'hydrogène qui est inférieure à la perméabilité correspondante de la portion de membrane (110),
la perméabilité à l'hydrogène de la première couche (121) ou de la sous-couche (121', 121", 121"') comprise par la première couche (121) étant en particulier inférieure d'au moins un facteur 100, de préférence d'au moins un facteur 1000, de manière particulièrement préférée d'au moins un facteur 10⁶ à la perméabilité correspondante de la portion de membrane (110) et/ou à la perméabilité correspondante de la deuxième couche (122).

5. Capteur de pression (400) selon l'une des revendications 1 à 3, la première couche (121) ou une sous-couche (121', 121", 121‴) comprise par la première couche (121) présentant une perméabilité à l'hydrogène qui est supérieure à la perméabilité correspondante de la portion de membrane (110),
la perméabilité à l'hydrogène de la première couche (121) ou de la sous-couche (121', 121", 121"') comprise par la première couche (121) étant en particulier supérieure d'au moins un facteur 100, de préférence d'au moins un facteur 1000, de manière particulièrement préférée d'au moins un facteur 10⁶ à la perméabilité correspondante de la portion de membrane (110) et/ou à la perméabilité correspondante de la deuxième couche (122).

6. Capteur de pression (400) selon l'une des revendications précédentes, la première couche (121) comprenant au moins deux sous-couches (121', 121", 121"') dont les coefficients de dilatation thermique se situent entre les valeurs des coefficients de dilatation thermique de la portion de membrane (110) et de la deuxième couche (122), et les sous-couches (121', 121", 121‴) étant appliquées successivement sur la portion de membrane (110) de telle sorte que la sous-couche (12') qui est la plus proche du deuxième côté (112) de la portion de membrane diffère le moins de la section de membrane en termes de coefficient de dilatation thermique et chaque sous-couche suivante (121", 121‴) diffère plus fortement de la portion de membrane (110) en termes de coefficient de dilatation thermique que la précédente respective.

7. Capteur de pression (400) selon l'une des revendications précédentes, la première couche (121) présentant une épaisseur comprise entre 10 nm et 5000 nm, en particulier entre 10 nm et 500 nm, en particulier entre 20 nm et 200 nm.

8. Capteur de pression (400) selon l'une des revendications précédentes, la deuxième couche (122) ou une sous-couche (122', 122", 122"') comprise par la deuxième couche (122) présentant une résistance électrique qui est supérieure à 10 Mohms, en particulier supérieure à 100 Mohms.

9. Capteur de pression (400) selon l'une des revendications précédentes, le matériau dont est constituée la deuxième couche (122) ou une sous-couche (122', 122", 122"') comprise par la deuxième couche (122) étant décrit par la formule AlₓSi_{y}(O,N)_{1-x-y}, où
- x et y étant des fractions atomiques comprises entre 0 et 1 et leur somme est toujours inférieure ou égale à 1,
- Si est le silicium,
- Al est l'aluminium,
- O est l'oxygène et
- N est l'azote.

10. Capteur de pression (400) selon l'une des revendications précédentes, le matériau dont est constitué la portion de membrane (110) étant
- un acier inoxydable, en particulier un acier austénitique, ou
- un alliage spécial, en particulier Elgiloy, Hasteloy, 316L ou 1,4404.

11. Capteur de pression (400) selon l'une des revendications précédentes, le matériau dont est constituée la première couche (121) ou une sous-couche (121', 121", 121"') comprise par la première couche (121) étant décrit par la formule MₓN_{y}O_{z}C_{1-x-y-z}, où
- x, y et Z sont des fractions atomiques comprises entre 0 et 1, dont la somme est toujours inférieure ou égale à 1,
- N est l'azote,
- O est l'oxygène,
- C est le carbone et
- M représente l'un des éléments suivants : Al, Cr, Ti, Mo, W, Hf ou Zr, et/ou le matériau dont est constituée la première couche (121) ou une sous-couche (121', 121", 121"') comprise par la première couche (121) étant
- l'un des métaux Be, Sc, Ti, V, Cr, Fe, Ge, Zr, Nb, Mo, Ru, Rh, Pd, Ce, Pr, Nd, Pm, Gd, Tb, Dy, Ho, Lu, Hf, Ta, W, Re, Os, Ir, Pt ou Th, ou
- un alliage Fe-C, un alliage à base de Ni, un acier inoxydable, un alliage de Ti ou du Kovar, ou
- l'un des matériaux Si₃N₄, SiC, TiN, TiC, AlN, Al₂O₃, ZrO₂, BaTiO₃, Cr₂O₃, TiAlN ou ZrN.
